(19) Europäisches Patentamt
European Patent Office
Office européen des brevets

(11) **EP 2 205 477 B1**

(12) **EUROPÄISCHE PATENTSCHRIFT**

(45) Veröffentlichungstag und Bekanntmachung des Hinweises auf die Patenterteilung:
**09.03.2011 Patentblatt 2011/10**

(21) Anmeldenummer: **08775161.6**

(22) Anmeldetag: **17.07.2008**

(51) Int Cl.:
**B62D 5/00** *(2006.01)*

(86) Internationale Anmeldenummer:
**PCT/EP2008/059344**

(87) Internationale Veröffentlichungsnummer:
**WO 2009/059818 (14.05.2009 Gazette 2009/20)**

(54) **VERFAHREN ZUM ANSTEUERN EINER ÜBERLAGERUNGSLENKUNG**

METHOD FOR ACTIVATING A SUPERIMPOSED STEERING SYSTEM

PROCÉDÉ DE COMMANDE D'UNE DIRECTION À SUPERPOSITION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.11.2007 DE 102007000976**

(43) Veröffentlichungstag der Anmeldung:
**14.07.2010 Patentblatt 2010/28**

(73) Patentinhaber: **ZF-Lenksysteme GmbH 73527 Schwäbisch Gmünd (DE)**

(72) Erfinder:
• **BUERING, Hendrik
  73525 Schwäbisch Gmünd (DE)**
• **GROSSHEIM, Reinhard
  73543 Abtsgmünd (DE)**
• **WANNER, Thomas
  73527 Schwäbisch Gmünd (DE)**

(56) Entgegenhaltungen:
**EP-A- 1 741 615      DE-A1- 3 624 530
DE-A1- 10 354 663**

**Beschreibung**

Die Erfindung betrifft ein Verfahren zum Betreiben einer Überlagerungslenkung, eine solche Überlagerungslenkung, ein Steuergerät zum Einsatz in einer solchen Überlagerungslenkung sowie ein Computerprogramm und ein Computerprogrammprodukt mit Programmcodemittel, um ein derartiges Verfahren durchzuführen.

Bei einer Überlagerungs- bzw. Winkelüberlagerungslenkung erfolgt eine Überlagerung des vom Fahrer vorgegebenen Lenkradwinkels mit einem Überlagerungs- bzw. Zusatzwinkel zur situationsabhängigen Unterstützung des Fahrers. Dabei ergibt sich der sog. Ritzelwinkel, der den eigentlichen Lenkwinkel und somit das Maß der Auslenkung der angelenkten Räder bestimmt.

Die Funktion des geschwindigkeitsabhängigen variablen Übersetzungsverhältnisses für Überlagerungslenkungssysteme ermittelt dabei in Abhängigkeit der Fahrzeuglängsgeschwindigkeit eine geschwindigkeitsabhängige variable Lenkübersetzung zwischen Lenkradwinkel und Ritzelwinkel. Aus diesem Zusammenhang ergibt sich ein Überlagerungswinkel bzw. Zusatzwinkel, der vom Zusatzwinkelsteller des Überlagerungslenksystems einzustellen ist.

Bei bekannten Verfahren zum Betreiben einer Überlagerungslenkung wird ein von einer Lenkhandhabe vorgegebener Lenkradwinkel mit einem Lenkgetriebe in den Ritzelwinkel umgesetzt, der ein Maß des Radlenkwinkels für wenigstens ein lenkbares Rad des Kraftfahrzeugs bestimmt. Dabei wird ein Zusatzwinkel generiert und in dem Lenkgetriebe dem vorgegebenen Lenkradwinkel überlagert. Es folgt somit eine Überlagerung des vom Fahrer bestimmten Lenkradwinkels durch einen üblicherweise in Abhängigkeit der Fahrgeschwindigkeit generierten Zusatzwinkel. Die gattungsbildende DE 103 54 663 A1 offenbart ein solches Verfahren.

Der über das Lenkrad vorgegebene Lenkwinkel $\delta_S$ wird von dem Zusatzwinkel $\delta_M$ überlagert, so dass sich ein Ritzelwinkel $\delta_G$ ergibt, der direkten Einfluss auf den an den Vorderrädern anliegenden Lenkwinkel $\delta_F$ hat.

Es gilt

$$i_v = \frac{\delta_S}{\delta_F}$$

wobei $i_v$ als Übersetzungsverhältnis bezeichnet wird, das das Verhältnis zwischen Lenkradwinkel $\delta_S$ und Vorderradwinkel $\delta_F$ definiert.

Die Lenkübersetzung der Überlagerungslenkung, die das Verhältnis zwischen Lenkradwinkel $\delta_s$ und Ritzelwinkel $\delta_G$ bestimmt, beeinflusst somit direkt das Übersetzungsverhältnis $i_v$.

Bei sog. Aktivlenkungen wird die Lenkübersetzung in Abhängigkeit von Fahrgeschwindigkeit und üblicherweise Lenkeinschlag verändert. Bei höheren Geschwindigkeiten, bspw. bei einer Autobahnausfahrt, soll die Geschwindigkeit nur langsam auf die Lenkübersetzung wirken. Dazu durchläuft das Geschwindigkeitssignal ein Signalfilter. Wird nun das Fahrzeug mit eingeschlagenem Lenkrad schnell abgebremst, kann es bedingt durch die zeitliche Verzögerung des Signalfilters nach dem Stillstand des Fahrzeugs zu einer Bewegung des Lenkrads kommen. Diese Bewegung ist störend.

Es stellt sich somit die Aufgabe, diese nachteilige Wirkung zu vermeiden.

Das erfindungsgemäße Verfahren zum Ansteuern einer Überlagerungslenkung, bei der eine Lenkübersetzung in Abhängigkeit der Fahrgeschwindigkeit verändert wird, wobei die Fahrgeschwindigkeit bei der Ermittlung der Lenkübersetzung zeitlich verzögert berücksichtigt wird, sieht vor, dass die zeitliche Verzögerung in Abhängigkeit der Fahrgeschwindigkeit verändert wird.

Durch Verändern der zeitlichen Verzögerung bzw. durch Variieren des Maßes der zeitlichen Verzögerung kann insbesondere in einer Situation, in der das Fahrzeug schnell abgebremst wird, sichergestellt werden, dass die Fahrgeschwindigkeit möglichst schnell in die Berechnung der Lenkübersetzung und damit des Motorsollwinkels einfließt und bei Stillstand des Fahrzeugs keine Bewegung am Lenkrad erzeugt wird.

Die zeitliche Verzögerung kann dabei über mindestens ein Filter eingestellt werden. Werden bspw. zwei Filter, üblicherweise PT1-Filter, verwendet, so ist vorgesehen, dass bei Fahrgeschwindigkeiten unterhalb eines bestimmten Werts das Filter mit der geringeren zeitlichen Verzögerung zum Einsatz kommt. Grundsätzlich ist es möglich, eine Anzahl von Filtern einzusetzen, die jeweils einem bestimmten Geschwindigkeitsbereich zugeordnet sind.

Alternativ kann auch ein adaptives Filter eingesetzt werden, dessen Zeitkonstante in Abhängigkeit der Fahrgeschwindigkeit verändert werden kann.

Dieses adaptive Filter hat somit eine variable Filterkonstante, d. h. bei kleinen Geschwindigkeiten wird das Signal, das die Information zu der Fahrgeschwindigkeit trägt, weniger verzögert als bei hohen Geschwindigkeiten. Damit kann die Angleichung der Lenkübersetzung bei einer starken Abbremsung des Fahrzeugs bereits beim Verzögern des Fahrzeugs abgeschlossen werden. Das Lenkrad bewegt sich beim Stillstand des Fahrzeugs nicht mehr.

In Ausgestaltung ist vorgesehen, dass die Lenkübersetzung zusätzlich in Abhängigkeit eines Lenkeinschlags verändert wird.

Die erfindungsgemäße Überlagerungslenkung eines Kraftfahrzeugs weist eine Lenkhandhabe zur Vorgabe eines Lenkradwinkels als Maß für einen gewünschten Lenkwinkel für wenigstens ein lenkbares Rad des Kraftfahrzeugs, einen Zusatzwinkelsteller, der in Abhängigkeit der Fahrgeschwindigkeit einen Zusatzwinkel bzw. Überlagerungswinkel erzeugt, und ein Lenkgetriebe, das den Lenkradwinkel durch eine Überlagerung des Lenkradwinkels mit dem Zusatzwinkel in einen Ritzelwinkel umsetzt, auf. Dabei wird die Fahrgeschwindigkeit zeitlich verzögert berücksichtigt, wobei die zeitliche Verzögerung bzw. deren Maß in Abhängigkeit der Fahrgeschwindigkeit verändert wird.

Bei der Überlagerungslenkung umfasst in Ausgestaltung der Zusatzwinkelsteller einen Elektromotor, der mit einem Steuergerät angesteuert ist.

Das erfindungsgemäße Steuergerät dient insbesondere zur Durchführung des vorstehend beschriebenen Verfahrens und kommt in einer vorstehend dargelegten Überlagerungslenkung zum Einsatz. Dieses Steuergerät ist dazu ausgelegt, einen Zusatzwinkel in Abhängigkeit der Fahrgeschwindigkeit zu ermitteln, wobei die Fahrgeschwindigkeit zeitlich verzögert berücksichtigt ist. Dabei wird die zeitliche Verzögerung in Abhängigkeit der Fahrgeschwindigkeit verändert.

Das erfindungsgemäße Computerprogramm umfasst Programmcodemittel, um ein Verfahren zum Betreiben einer Überlagerungslenkung der vorstehend beschriebenen Art durchzuführen, wenn das Computerprogramm auf einem Mikroprozessor eines Computers, insbesondere in einem Steuergerät der Überlagerungslenkung, ausgeführt wird.

Dieses Computerprogramm kann auf einem computerlesbaren Datenträger, wie bspw. einer Diskette, CD, DVD, Festplatte, einem USV Memory Stick oder ähnlichem, oder einem Internetserver als Computerprogrammprodukt gespeichert sein. Von dort kann das Computerprogramm in ein Speicherelement des Steuergeräts übertragen werden.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im folgenden unter Bezugnahme auf die Zeichnung ausführlich beschrieben.

Figur 1    zeigt eine Ausführungsform der erfindungsgemäßen Überlagerungslenkung.

Figur 2    zeigt ein beispielhaftes Übersetzungsverhältnis als Funktion der Fahrzeuggeschwindigkeit zur Ver- deutlichung des erfindungsgemäßen Verfahrens.

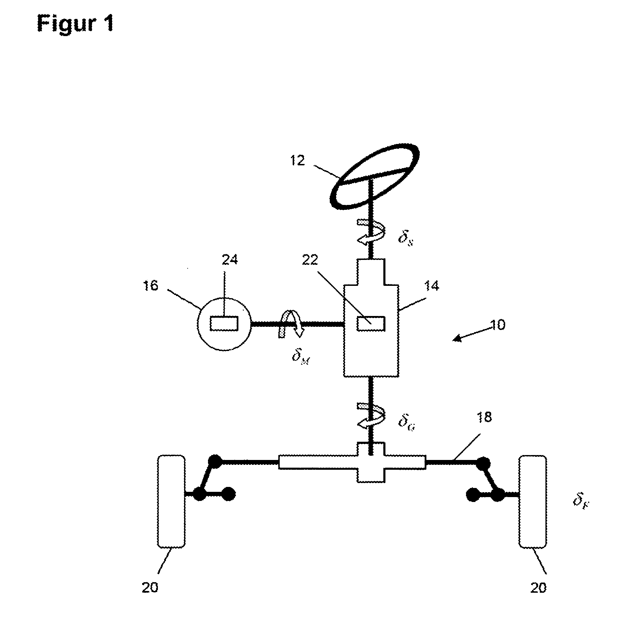

In Figur 1 ist eine Ausführungsform der erfindungsgemäßen Überlagerungslenkung dargestellt, die insgesamt mit der Bezugsziffer 10 bezeichnet ist. In der Darstellung sind eine Lenkhandhabe 12, in diesem Fall ein Lenkrad, ein Lenkgetriebe 14, ein Zusatzwinkelsteller 16 und zwei über eine Vorderachse 18 verbundene Vorderräder 20, die zum Steuern des Fahrzeugs angelenkt werden, dargestellt.

Weiterhin ist ein Steuergerät 22 vorgesehen, dass zur Ansteuerung eines Elektromotors 24 des Zusatzwinkelstellers 16 vorgesehen ist.

Der über die Lenkhandhabe 12 vorgegebene Lenkwinkel $\delta_S$ wird in dem Lenkgetriebe 14 von einem Zusatzwinkel bzw. Motorlenkwinkel $\delta_M$ von einem Zusatzwinkel des Elektromotors 24 des Zusatzwinkelstellers 16 überlagert, so dass sich ein Ritzelwinkel $\delta_G$ ergibt, der direkten Einfluss auf die an den Vorderrädern anliegenden Lenkwinkel $\delta_F$ hat.

Es gilt

$$i_v = \frac{\delta_S}{\delta_F}$$

und

$$\delta_M \times i_M + \delta_S \times i_D = \delta_G$$

wobei $i_M$ und $i_D$ vorzugebende Faktoren sind.

Bei der Ermittlung des Zusatzwinkels $\delta_M$ wird die Fahrgeschwindigkeit des Kraftfahrzeugs berücksichtigt, wobei dies zeitliche verzögert erfolgt. Erfindungsgemäß ist nunmehr vorgesehen, dass die zeitliche Verzögerung in Abhängigkeit der Fahrgeschwindigkeit verändert wird, d.h. das Maß der zeitlichen Verzögerung wird in Abhängigkeit der Fahrgeschwindigkeit verändert. So wird in einer Situation, bei der das Fahrzeug mit eingeschlagenem Lenkrad schnell abgebremst wird, die Geschwindigkeit möglichst rasch in die Berechnung des Zusatzwinkels $\delta_M$ einfließen, um bei Stillstand des Fahrzeugs keine Bewegung am Lenkrad zu erzeugen.

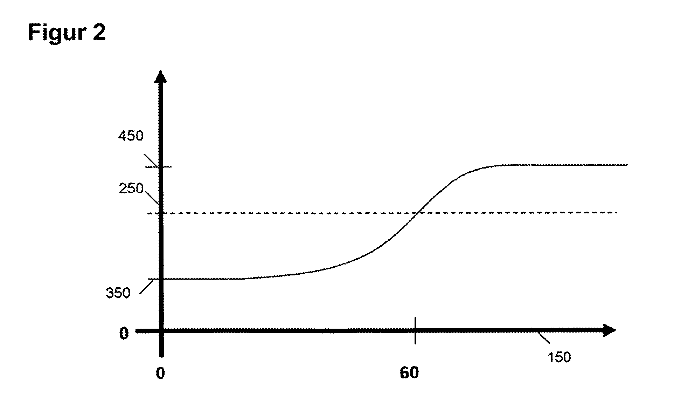

In Figur 2 ist in einem Graphen ein beispielhaftes Übersetzungsverhältnis $i_v$ als Funktion der Fahrzeuggeschwindigkeit zur Verdeutlichung des erfindungsgemäßen Verfahrens aufgetragen.

In dem gezeigten Graphen ist an der Abszisse 150 die Fahrzeuggeschwindigkeit und an der Ordinate 250 das Übersetzungsverhältnis $i_v$ aufgetragen. Der Graph verdeutlicht somit das Übersetzungsverhältnis $i_v$ als Funktion der Fahrzeuggeschwindigkeit, wobei das Übersetzungsverhältnis $i_v$ als das Verhältnis zwischen Lenkradwinkel und Vorderradwinkel definiert ist, nämlich:

$$i_v = \text{Sollübersetzung} = \text{Lenkradwinkel/Vorderradwinkel}$$

Das Übersetzungsverhältnis $i_v$ verläuft zwischen $i_{v\min}$ 350 bei geringen Geschwindigkeiten, d.h. in direktem Betrieb bzw. ins Direkte, und $i_{v\max}$ 450 bei hohen Geschwindigkeiten, d.h. im indirekten Betrieb. Zu erkennen ist, dass bei einer Geschwindigkeit von 60 km/h ein rein mechanisches Lenken erfolgt und der Zusatzwinkelsteller nicht eingreift. Bei niedrigen Geschwindigkeiten wird unterstützend eingegriffen und bei hohen Geschwindigkeiten wird gegengelenkt.

Dabei ist zu berücksichtigen, dass die Geschwindigkeit des Fahrzeugs zeitlich verzögert, bspw. verursacht durch ein Filter in dem Weg des Signals, das die Information zu der Fahrzeuggeschwindigkeit trägt, einfließt. Erfindungsgemäß ist nunmehr vorgesehen, dass diese zeitliche Verzögerung in Abhängigkeit der Fahrzeuggeschwindigkeit festgelegt wird.

Dies bedeutet, dass bei einer Fahrt mit geringer Geschwindigkeit die Größe der Fahrzeuggeschwindigkeit sich schneller auf die Ermittlung des Zusatzwinkels auswirkt als bei einer Fahrt mit hoher Geschwindigkeit. Auf diese Weise kann sichergestellt werden, dass bei Stillstand des Fahrzeugs das Lenkrad sich nicht mehr bewegt.

**Patentansprüche**

1. Verfahren zum Ansteuern einer Überlagerungslenkung (10), bei dem eine Lenkübersetzung in Abhängigkeit der Fahrgeschwindigkeit verändert wird, wobei die Fahrgeschwindigkeit zeitlich verzögert berücksichtigt wird, **dadurch gekennzeichnet, dass** die zeitliche Verzögerung in Abhängigkeit der Fahrgeschwindigkeit verändert wird.

2. Verfahren nach Anspruch 1, bei dem die zeitliche Verzögerung über mindestens ein Filter eingestellt wird.

3. Verfahren nach Anspruch 2, bei dem ein adaptives Filter eingesetzt wird.

4. Verfahren nach einem der Ansprüche 1 bis 3, bei dem die Lenkübersetzung zusätzlich in Abhängigkeit eines Lenkradwinkels ($\delta_S$) verändert wird.

5. Überlagerungslenkung eines Kraftfahrzeugs mit
   einer Lenkhandhabe (12) zur Vorgabe eines Lenkradwinkels ($\delta_S$),
   einem Zusatzwinkelsteller (16), der in Abhängigkeit der Fahrgeschwindigkeit einen Zusatzwinkel ($\delta_M$) erzeugt, wobei die Fahrgeschwindigkeit zeitlich verzögert berücksichtigt wird,
   einem Lenkgetriebe (14), das den Lenkradwinkel ($\delta_S$) durch eine Überlagerung des Lenkradwinkels ($\delta_S$) mit dem Zusatzwinkel ($\delta_M$) in einen Ritzelwinkel ($\delta_G$) umsetzt,
   **dadurch gekennzeichnet, dass**
   die zeitliche Verzögerung in Abhängigkeit der Fahrgeschwindigkeit verändert wird.

6. Überlagerungslenkung nach Anspruch 5, bei der der Zusatzwinkelsteller (16) einen Elektromotor (24) umfasst, der mit einem Steuergerät (22) angesteuert ist.

7. Steuergerät, insbesondere zur Durchführung eines Verfahrens nach einem der Ansprüche 1 bis 5, das in einer Überlagerungslenkung (10) nach Anspruch 6 zum Einsatz kommt und dazu ausgelegt ist, einen Zusatzwinkel ($\delta_M$) in Abhängigkeit der Fahrgeschwindigkeit zu ermitteln, wobei die Fahrgeschwindigkeit zeitlich verzögert berücksichtigt wird,

**dadurch gekennzeichnet, dass**
die zeitliche Verzögerung in Abhängigkeit der Fahrgeschwindigkeit verändert wird.

8. Computerprogramm mit Programmcodemitteln, um ein Verfahren nach einem der Ansprüche 1 bis 5 durchzuführen, wenn das Computerprogramm auf einem Mikroprozessor eines Computers, insbesondere in einem Steuergerät (22) nach Anspruch 7 in einer Überlagerungslenkung (10) nach Anspruch 5 oder 6, ausgeführt wird.

9. Computerprogrammprodukt mit Programmcodemitteln, die auf einem computerlesbaren Datenträger gespeichert sind, um ein Verfahren nach einem der Ansprüche 1 bis 5 durchzuführen, wenn das Computerprogramm auf einem Mikroprozessor eines Computers, insbesondere in einem Steuergerät (22) gemäß Anspruch 7 in einer Überlagerungslenkung (10) nach Anspruch 5 oder 6, ausgeführt wird.

**Claims**

1. Method for controlling a superposition steering system (10), in which method a steering ratio is varied as a function of the driving speed, with the driving speed being taken into consideration in a time-delayed manner, **characterized in that** the time delay is varied as a function of the driving speed.

2. Method according to Claim 1, in which the time delay is set by means of at least one filter.

3. Method according to Claim 2, in which an adaptive filter is used.

4. Method according to one of Claims 1 to 3, in which the steering ratio is additionally varied as a function of a steering wheel angle ($\delta_S$).

5. Superposition steering system of a motor vehicle having
a steering handle (12) for defining a steering wheel angle ($\delta_S$),
an additional angle actuator (16) which generates an additional angle ($\delta_M$) as a function of the driving speed, with the driving speed being taken into consideration in a time-delayed manner,
a steering gear (14) which converts the steering wheel angle ($\delta_S$) into a pinion angle ($\delta_G$) by superposition of the additional angle ($\delta_M$) on the steering wheel angle ($\delta_S$),
**characterized in that**
the time delay is varied as a function of the driving speed.

6. Superposition steering system according to Claim 5, in which the additional angle actuator (16) comprises an electric motor (24) which is controlled by means of a control unit (22).

7. Control unit, in particular for carrying out a method according to one of Claims 1 to 5, which is used in a superposition steering system (10) according to Claim 6 and is designed for determining an additional angle ($\delta_M$) as a function of the driving speed, with the driving speed being taken into consideration in a time-delayed manner,
**characterized in that**
the time delay is varied as a function of the driving speed.

8. Computer program having program code means in order to carry out a method according to one of Claims 1 to 5 when the computer program is executed on a microprocessor of a computer, in particular in a control unit (22) according to Claim 7 in a superposition steering system (10) according to Claim 5 or 6.

9. Computer program product having program code means which are stored on a computer-readable data carrier in order to carry out a method according to one of Claims 1 to 5 when the computer program is executed on a microprocessor of a computer, in particular in a control unit (22) according to Claim 7 in a superposition steering system (10) according to Claim 5 or 6.

**Revendications**

1. Procédé pour commander une direction à superposition (10), selon lequel une démultiplication de direction est modifiée en fonction de la vitesse de déplacement, la vitesse de déplacement étant prise en compte avec un retard dans le temps, **caractérisé en ce que** le retard dans le temps est modifié en fonction de la vitesse de déplacement.

2. Procédé selon la revendication 1, selon lequel le retard dans le temps est réglé par le biais d'au moins un filtre.

3. Procédé selon la revendication 2, selon lequel un filtre adaptatif est utilisé.

4. Procédé selon l'une des revendications 1 à 3, selon lequel la démultiplication de la direction est en plus modifiée en fonction d'un angle de volant de direction ($\delta_S$).

5. Direction à superposition d'un véhicule automobile, comprenant
une manette de direction (12) pour prédéfinir un angle de volant de direction ($\delta_S$),
un élément de réglage d'angle supplémentaire (16) qui génère un angle supplémentaire ($\delta_M$) en fonction de la vitesse de déplacement, la vitesse de déplacement étant prise en compte avec un retard dans le temps,
un engrenage de direction (14) qui convertit l'angle de volant de direction ($\delta_S$) en un angle de pignon ($\delta_G$) en superposant l'angle de volant de direction ($\delta_S$) à l'angle supplémentaire ($\delta_M$),
**caractérisée en ce que**
le retard dans le temps est modifié en fonction de la vitesse de déplacement.

6. Direction à superposition selon la revendication 5, dans laquelle l'élément de réglage d'angle supplémentaire (16) comprend un moteur électrique (24) qui est commandé avec un module de commande (22).

7. Module de commande, notamment pour mettre en oeuvre un procédé selon l'une des revendications 1 à 5, qui est utilisé dans une direction à superposition (10) selon la revendication 6 et qui est conçu pour déterminer un angle supplémentaire ($\delta_M$) en fonction de la vitesse de déplacement, la vitesse de déplacement étant prise en compte avec un retard dans le temps, **caractérisé en ce que**
le retard dans le temps est modifié en fonction de la vitesse de déplacement.

8. Programme informatique comprenant des moyens de code de programme pour mettre en oeuvre un procédé selon l'une des revendications 1 à 5 lorsque le programme informatique est exécuté sur un microprocesseur d'un ordinateur, notamment dans un module de commande (22) selon la revendication 7 dans une direction à superposition (10) selon la revendication 5 ou 6.

9. Produit de programme informatique comprenant des moyens de code de programme, lesquels sont enregistrés sur un support de données lisible par ordinateur, pour mettre en oeuvre un procédé selon l'une des revendications 1 à 5 lorsque le programme informatique est exécuté sur un microprocesseur d'un ordinateur, notamment dans un module de commande (22) selon la revendication 7 dans une direction à superposition (10) selon la revendication 5 ou 6.

# Figur 1

**Figur 2**

**EP 2 205 477 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10354663 A1